# EUROPÄISCHE PATENTSCHRIFT

(11) **EP 2 806 316 B1**
(45) Veröffentlichungstag und Bekanntmachung des Hinweises auf die Patenterteilung: **05.07.2017**
(21) Anmeldenummer: 13169197.4
(22) Anmeldetag: 24.05.2013
(51) Int. Cl.: G05B 9/02, G05B 19/042

(54) **Verfahren zum Betreiben eines Automatisierungssystems**
Method for operating an automation system
Procédé destiné au fonctionnement d'un système d'automatisation

(43) Veröffentlichungstag der Anmeldung: 26.11.2014
(73) Patentinhaber: Siemens Aktiengesellschaft, 80333 München (DE)
(72) Erfinder: Maier, Willi, 77728 Oppenau (DE); Rottmann, Norbert, 76829 Landau (DE)

(56) Entgegenhaltungen:
- EP-A1- 1 857 938
- EP-A2- 0 478 288
- EP-A2- 2 031 470
- EP-A2- 2 098 959

## Beschreibung

Die Erfindung betrifft ein Verfahren zum Betreiben eines Automatisierungssystems gemäß dem Oberbegriff des Anspruchs 1. Darüber hinaus betrifft die Erfindung ein Automatisierungssystem, welches zur Durchführung des Verfahrens geeignet ist sowie ferner ein Peripheriesystem für ein derartiges Automatisierungssystem.

Im Automatisierungsumfeld werden verstärkt hochverfügbare Lösungen (H-Systeme) gefordert, welche geeignet sind, eventuell auftretende Stillstandszeiten der Anlage auf ein Minimum zu reduzieren. Diese H-Systeme weisen gewöhnlich zwei mehrere Baugruppen aufweisende Automatisierungsgeräte auf, wobei auf die an die Automatisierungsgeräte angeschlossenen mit mehreren Peripheriebaugruppen versehenen Peripherieeinheiten beide Automatisierungsgeräte lesend und/oder schreibend zugreifen können. Eines der beiden Automatisierungsgeräte ist bezüglich der an das System angeschlossenen Peripherieeinheiten führend. Dies bedeutet, dass Ausgaben zu den Peripherieeinheiten bzw. Ausgangsinformationen für diese Peripherieeinheiten nur von einem der beiden Automatisierungsgeräte durchgeführt werden, welches als Master arbeitet bzw. die Masterfunktion übernommen hat. Damit beide Automatisierungsgeräte synchron ablaufen können, werden diese in regelmäßigen Abständen synchronisiert.

Häufig ist es auch erwünscht, zwei jeweils als Eingabebaugruppe ausgebildete Peripheriebaugruppen einer Peripherieeinheit oder zwei Peripheriebaugruppen von zwei derartigen Peripheriegeräten redundant zu betreiben, wobei ein Sensor redundant an die jeweilige (Partner-)Peripheriebaugruppe angeschlossen ist und die Peripheriegeräte über einen Bus mit einem mehrere Baugruppen aufweisenden Automatisierungsgerät in Form eines Zentral- oder Erweiterungsgerätes verbunden sind. Ein derartiges System ist z. B. aus dem Siemens-Katalog
ST 70, Kapitel 8, Ausgabe 2012 bekannt.
Die beiden redundant betriebenen Peripheriebaugruppen erfassen jeweils die Prozesseingangswerte bzw. Sensordaten - im Folgenden als korrespondierende Prozesseingangswerte bezeichnet - zwar nahezu zum gleichen Zeitpunkt, es kann allerdings vorkommen, dass dem übergeordneten Automatisierungsgerät diese korrespondierenden Prozesseingangswerte zu verschiedenen Zeitpunkten von den beiden Peripheriebaugruppen zur Verarbeitung bereitgestellt werden. Dies ist insbesondere dann der Fall, wenn die Peripheriebaugruppen in verschiedenen Peripheriegeräten angeordnet sind, die sich beispielweise im Hinblick auf die Anzahl der in diesen Peripheriegeräten eingesetzten Peripheriebaugruppen sowie im Hinblick auf deren Belastung unterscheiden, wodurch gewöhnlich die Übermittlung der korrespondierenden Prozesseingangswerte der beiden Peripheriegeräte zum Automatisierungsgerät nicht synchron erfolgt. Mit anderen Worten: Die jeweiligen "Erfassungsketten" für die Prozesseingangswerte vom Sensor über die jeweiligen redundanten Peripheriegeräte und Busverbindungen bis zum Anwenderprogramm des Automatisierungsgerätes arbeiten nicht synchron, wodurch das Automatisierungsgerät zu einem Zeitpunkt Prozesseingangswerte verarbeitet, die zu unterschiedlichen Zeitpunkten von dem Sensor erfasst wurden, was bedeutet, dass dem Automatisierungsgerät nicht korrespondierende Prozesseingangswerte zur Verarbeitung anstehen.

Um zu erkennen, ob die korrespondierenden Prozesseingangswerte der beiden redundanten Peripheriebaugruppen plausibel und gültig sind, werden mittels einer überlagerten Software

(Redundanz-Library) diese Prozesseingangswerte gewöhnlich geprüft und überwacht. Dazu werden entsprechende Grenzwerte projektiert bzw. vorgegeben, im Rahmen derer die Prozesseingangswerte für gültig oder ungültig bewertet werden.

Ein Verfahren gemäß dem Obebegriff des Anspruchs 1 ist aus der EP 1 857 938 A1 bekannt.

Der Erfindung liegt die Aufgabe zugrunde, ein Verfahren der eingangs genannten Art anzugeben, mittels welchem korrespondierende Prozesseingangswerte der beiden Peripheriebaugruppen von dem Automatisierungsgerät erkannt werden. Darüber hinaus sind ein Automatisierungssystem, welches zur Durchführung des Verfahrens geeignet ist, sowie ein dezentrales Peripheriesystem für ein derartiges Automatisierungssystem zu schaffen.

Diese Aufgabe wird im Hinblick auf das Verfahren durch die im kennzeichnenden Teil des Anspruchs 1 angegebenen, bezüglich des Automatisierungssystems durch die im Anspruch 3 und in Bezug auf das dezentrale Peripheriesystem durch die im kennzeichnenden Teil des Anspruchs 2 angegebenen Maßnahmen gelöst.

Während gleicher Betriebszyklen im synchronisierten Betrieb des Masters und Slaves eingelesene korrespondierende Prozesseingangswerte bzw. Sensordaten werden mit einer Zykluskennung gekennzeichnet und diese zusammen mit den dazugehörigen Sensordaten sowohl vom Master als auch vom Slave dem Automatisierungsgerät bereitgestellt. Mittels der jeweiligen Zykluskennung, z. B. eine Zykluskennung in Form einer Zyklusnummer, erkennt das Automatisierungsgerät, ob die übermittelten Sensordaten quasi gleichzeitig vom Master und vom Slave eingelesen wurden.

Vorteilhaft kann die Plausibilitätsprüfung im Hinblick auf projektierte Grenzwerte, im Rahmen derer die Prozesseingangswerte für gültig oder ungültig bewertet werden, vereinfacht werden; denn die sich aus den Übertragungs- und Zykluszeiten ergebenden Differenzen müssen nicht berücksichtigt werden. Es sind lediglich die Ungenauigkeiten bezüglich der Erfassung der Prozesseingangswerte zu berücksichtigen, weil die erfassten Werte vom Master und Slave gewöhnlich nicht exakt übereinstimmen sondern leicht abweichen.

Dem Automatisierungsgerät wird zusätzlich zu der Zykluskennung eine Synchronisationskennung übermittelt. Dadurch wird sichergestellt, dass während eines unsynchronisierten Betriebs des Masters und des Slaves aufgrund eines Synchronisationsverlusts - also während eines unsynchronisierten Master- oder Slave-Zyklus - das Automatisierungsgerät die Zykluskennung nicht auswertet.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen
- Figur 1: Bestandteile eines Automatisierungssystems,
- Figuren 2 und 3: Master- und Slave-Verfahrensschritte und
- Figur 4: einen Zykluskennung-Datensatz.

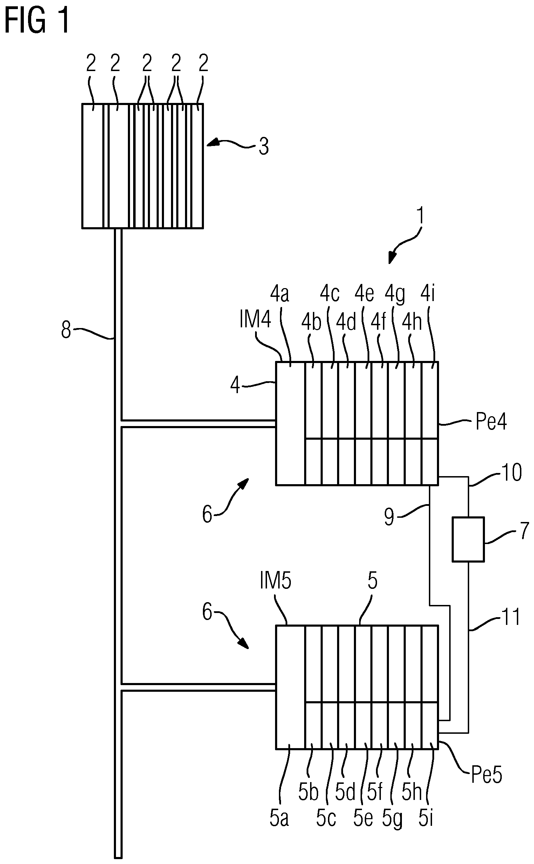

In der Figur 1 ist mit 1 ein Automatisierungssystem bezeichnet, welches zur Steuerung eines technischen Prozesses oder einer Anlage vorgesehen ist. Bestandteile dieses Automatisierungssystems 1 sind im vorliegenden Ausführungsbeispiel ein mehrere Baugruppen 2 aufweisendes Automatisierungsgerät 3, ein zwei Peripheriegeräte 4, 5 aufweisendes dezentrales Peripheriesystem 6 sowie ein Sensor 7. Die Peripheriegeräte 4, 5 sind jeweils versehen mit mehreren Peripheriebaugruppen 4a, 4b, ..., 5a, 5b, ... , wobei eine dieser Peripheriebaugruppen 4a, 5a der jeweiligen Peripheriegeräte 4, 5 als Anschaltbaugruppe IM4, IM5 ausgebildet ist. Diese Anschaltbaugruppen IM4, IM5 sind zum Anschluss an einen für hohe Kommunikationsgeschwindigkeiten ausgelegten dezentralen Feldbus 8 vorgesehen, beispielsweise an einen an sich bekannten Feldbus "PROFIBUS DP". Darüber hinaus greifen diese Anschaltbaugruppen IM4, IM5 lesend und/oder schreibend auf die Peripheriebaugruppen 4a, 4b, ..., 5a, 5b, ... zu. Einerseits werden im

Rahmen eines Lesezugriffs die von den als Eingabebaugruppen ausgebildeten Peripheriebaugruppen bereitgestellten Prozesseingangsdaten (Istwerte) der Sensoren eingelesen und von den Anschaltbaugruppen IM4, IM5 dem Automatisierungsgerät 3 übermittelt, andererseits werden im Rahmen eines Schreibzugriffs die von dem Automatisierungsgerät 3 den Anschaltbaugruppen IM4, IM5 zugeführten Prozessausgangsdaten (Sollwerte) den als Ausgabebaugruppen ausgebildeten Peripheriebaugruppen zur Ansteuerung von Aktoren weitergeleitet. Die Baugruppen 2 des Automatisierungsgerätes 3, z. B. Baugruppen in Form von CPU-, Regler- und/oder Ein-/Ausgabe- und/oder sonstigen Funktions-Baugruppen, sowie die Peripheriebaugruppen der Peripheriegeräte 4, 5 sind jeweils über einen hier nicht dargestellten Rückwandbus verbunden.

Selbstverständlich kann das Automatisierungssystem 1 je nach einer zu lösenden Steuerungsaufgabe mit weiteren Automatisierungsgeräten und/oder dezentralen Peripheriegeräten versehen sein. Darüber hinaus kann das Automatisierungssystem 1 über einen hier nicht dargestellten Bus mit Engineeringsystemen, Bedien- und Beobachtungssystemen, Asset-Management-Systemen und/oder für ein Prozessleitsystem geeigneten Servern verbunden sein.

Um zwei Peripheriebaugruppen eines der beiden Peripheriegeräte 4, 5 oder eine Peripheriebaugruppe des Peripheriegerätes 4 mit einer Peripheriebaugruppe des Peripheriegerätes 5 redundant betreiben zu können, werden die beiden Peripheriebaugruppen zunächst über eine Synchronisationsleitung 9 gekoppelt und ein Sensor 7 redundant an diese beiden Peripheriebaugruppen angeschlossen. Im vorliegenden Ausführungsbeispiel sind die als Prozesseingabebaugruppen Pe4, Pe5 ausgebildeten Peripheriebaugruppen 4i, 5i über die Synchronisationsleitung 9 miteinander verbunden und der Sensor 7 über Leitungen 10, 11 redundant an diese beiden Prozesseingabebaugruppen Pe4, Pe5 angeschlossen. Dabei wird angenommen, dass die Prozesseingabebaugruppe Pe4 als Master M und die Prozesseingabebaugruppe Pe5 als Slave S parametriert sind, wobei diese Parametrierung während einer Parametrierungsphase mittels des Automatisierungsgerätes 3 oder eines hier nicht dargestellten Engineerings-Systems erfolgt. Während dieser Phase werden geeignete Parameter den Anschaltbaugruppen IM4, IM5 übermittelt, mittels derer die Peripheriebaugruppen 4a, 4b, ..., 5a, 5b, ... während Peripheriegeräte-Zyklen parametriert werden. Ein Kommunikationszyklus des für hohe Kommunikationsgeschwindigkeiten ausgelegten Feldbusses 8 ist selbstverständlich kürzer als die Peripheriegeräte-Zyklen, so dass alle an diesen Bus angeschlossenen Einheiten sehr schnell Informationen (Prozesswerte) austauschen können. Entsprechend sind Master- und Slave-Zyklen, während derer der Master M und der Slave S Sensordaten empfangen, länger als die Peripheriegeräte-Zyklen, weil während dieser Peripheriegeräte-Zyklen jede der Peripheriebaugruppen Informationen mit den Anschaltbaugruppen IM4, IM5 austauscht.

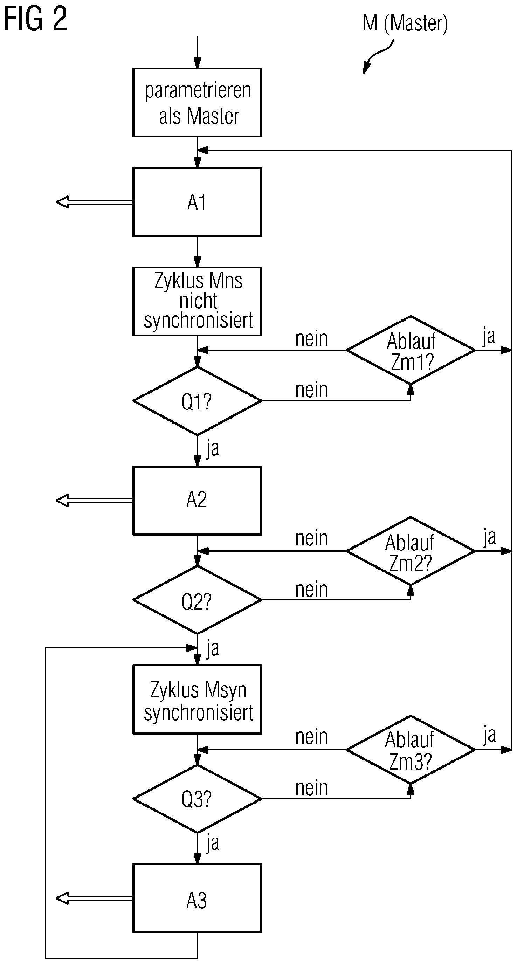

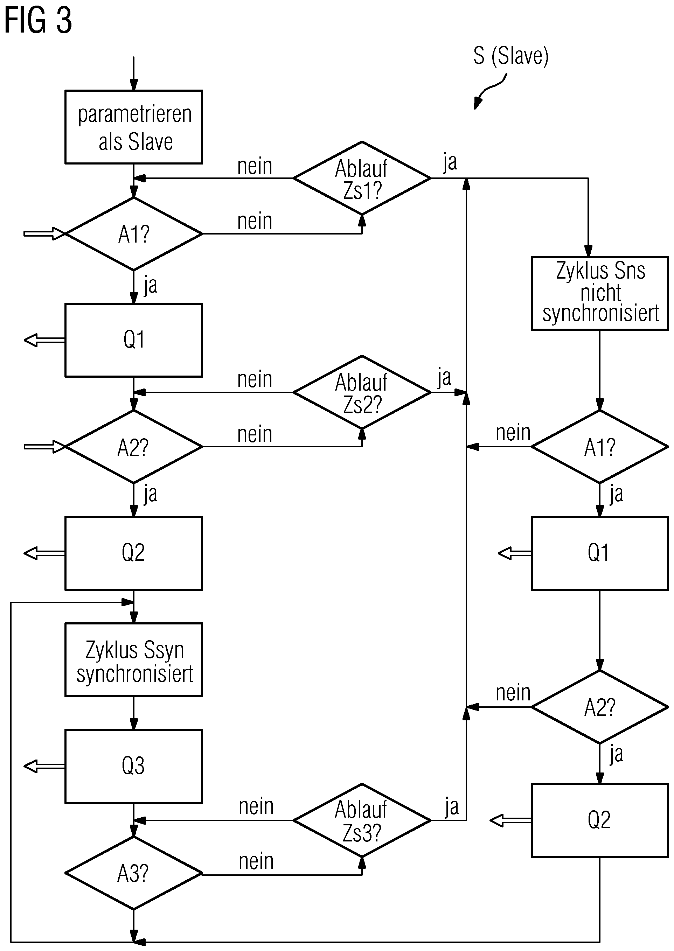

Anhand der Figuren 2 und 3 werden im Folgenden Verfahrensabläufe zur Erkennung eines Master- oder Slave-Ausfalls, Verfahrensabläufe zum Aufsynchronisieren sowie Verfahrensabläufe zum Synchronisieren der Master- und Slave-Zyklen näher erläutert.
Nach dem Parametrieren der Peripheriebaugruppe Pe4 als Master M und der Peripheriebaugruppe Pe5 als Slave S übermittelt der Master M dem Slave S eine erste Master-Synchronisationsanforderung A1 und startet unmittelbar nach dieser Übermittlung einen mit dem Slave S unsynchronisierten bzw. nicht synchronisierten Lesezyklus zum Lesen von Daten des Sensors 7, was in Figur 2 als "Zyklus Mns" bezeichnet ist und im Folgenden als unsynchronisierter Master-Zyklus bezeichnet wird. Der Master M führt weitere derartige unsynchronisierte Master-Zyklen Mns aus, falls der Master M während jeweils eines ersten Master-Zeitintervalls Zm1 die erste Slave-Synchronisationsquittung Q1 nicht empfängt.

Für den Fall, dass der Slave S diese erste Master-Synchronisationsanforderung A1 während eines ersten Slave-Zeitintervalls Zs1 empfängt - was dem Slave S anzeigt, dass der Master M in Betrieb bzw. vorhanden ist - antwortet der Slave S dem Master M mittels einer ersten Slave-Synchronisationsquittung Q1, wodurch dem Master M der Betrieb des Slaves S angezeigt wird.

Falls der Slave S die erste Master-Synchronisationsanforderung A1 während des ersten Slave-Zeitintervalls Zs1 nicht empfangen hat, so weist dies auf einen ausgefallenen bzw. nicht vorhandenen Master M hin und der Slave S startet in diesem Fall einen mit dem Master M unsynchronisierten bzw. nicht synchronisierten Lesezyklus zum Lesen der Sensordaten, was im Folgenden als unsynchronisierter Slave-Zyklus bezeichnet wird und in Figur 3 als "Zyklus Sns" bezeichnet ist.

Es wird im Folgenden davon ausgegangen, dass der Master M während des ersten Master-Zeitintervalls Zm1 die erste Slave-Synchronisationsquittung Q1 empfangen hat. In diesem Fall übermittelt der Master M dem Slave S eine zweite Master-Synchronisationsanforderung A2 und wartet während eines zweiten Master-Zeitintervalls Zm2 auf eine zweite Synchronisationsquittung Q2 des Slaves S. Diese zweite Synchronisationsquittung Q2 übermittelt der Slave S dem Master M für den Fall, dass der Slave S während eines zweiten Slave-Zeitintervalls Zs2 die zweite Master-Synchronisationsanforderung A2 empfangen hat, wobei der Slave S nach der Übermittlung dieser zweiten Synchronisationsquittung Q2 einen Lesezyklus startet. Dieser Lesezyklus ist mit einem Lesezyklus des Masters M dann synchronisiert, falls der Master M während eines zweiten Master-Zeitintervalls Zm2 die zweite Slave-Synchronisationsquittung Q2 empfangen hat. Diese Lesezyklen - im Folgenden im Hinblick auf den Master M als Msyn (Figur 2) und im Hinblick auf den Slave S als Ssyn (Figur 3) bezeichnet, erfolgen synchronisiert, falls einerseits der Master M während eines jeweiligen dritten Zeitintervalls Zm3 jeweils eine dritte Synchronisationsquittung Q3 empfängt und anderseits der Slave S während eines dritten Slave-Zeitintervalls Zs3 eine dritte Master-Synchronisationsanforderung A3 empfängt. Dabei übermittelt der Slave S zunächst dem Master M unmittelbar nach einem Lesezyklus Ssyn die dritte Synchronisationsquittung Q3 und der Master M dem Slave S unmittelbar nach Empfang dieser dritten Synchronisationsquittung Q3 die dritte Master-Synchronisationsanforderung A3.

Die dritten Master- und Slave-Zeitintervalle Zm3, Zs3, welche dem ersten Master-Zeitintervall Zm1 entsprechen, sind so gewählt, dass die Partner-Peripheriebaugruppen, also der Master M und der Slave S möglichst schnell erkennen, ob die jeweilige Partner-Peripheriebaugruppe noch vorhanden bzw. noch betriebsbereit ist. Die jeweiligen Zeitintervalle Zm1, Zm3 und Zs3 entsprechen der Summe aus der zweifachen Übertragungszeit der jeweiligen Synchronisationsinformation (Master-Synchronisationsanforderung, Slave-Synchronisationsquittung), der zweifachen maximalen Reaktionszeit auf den Empfang einer Synchronisationsinformation und einer Toleranzzuschlagszeit.

Die zweiten Master- und Slave-Zeitintervalle Zm2, Zs2 sind dagegen so gewählt, dass Master M und Slave S sich aufsynchronisieren können. Die jeweiligen Zeitintervalle Zm2, Zs2 entsprechen der Summe aus der zweifachen Übertragungszeit der jeweiligen Synchronisationsinformation (Master-Synchronisationsanforderung, Slave-Synchronisationsquittung), der zweifachen maximalen Reaktionszeit auf den Empfang einer Synchronisationsinformation, der maximalen Master- bzw. Slave-Zykluszeit und einer Toleranzzuschlagszeit.

Das erste Slave-Zeitintervall Zs1 ist größer als ein Slave- Zyklus gewählt, wobei dieses Zeitintervall einer Slave-Wartezeit entspricht, während der der Slave S aufgrund der Master-Synchronisationsanforderung A1 erkennen kann, ob der Master M überhaupt betriebsbereit bzw. vorhanden ist bzw. ob eine Peripheriebaugruppe überhaupt als Master parametriert ist.

In den Fällen, in denen der Master M während der Master-Zeitintervalle Zm1, Zm2, Zm3 nicht die entsprechenden Slave-Synchronisationsquittungen Q1, Q2, Q3 empfängt, übermittelt der Master M dem Slave S jeweils die erste Synchronisationsanforderung A1 und startet jeweils den unsynchronisierten Lesezyklus Mns. In diesen Fällen ist der Slave S ausgefallen.

In den Fällen, in denen der Slave S während der Slave-Zeitintervalle Zs1, Zs2, Zs3 nicht die entsprechenden Master-Synchronisationsanforderungen A1, A2, A3 empfängt, was auf einen Ausfall des Masters M hinweist, startet der Slave S jeweils einen unsynchronisierten Lesezyklus Sns. Nach einem derartigen unsynchronisierten Lesezyklus Sns überwacht der Slave S den Empfang zunächst der ersten Master-Synchronisationsanforderung A1 und dann - falls der Slave S diese empfangen hat - den Empfang der zweiten Master-Synchronisationsanforderung A2. Für den Fall, dass der Slave S die jeweilige Anforderung A1, A2 empfangen hat, führt der Slave S jeweils die erste und die zweite Slave-Synchronisationsquittung Q1, Q2 dem Master M zu und startet schließlich - wie beschrieben - den synchronisierten Lesezyklus Ssyn.

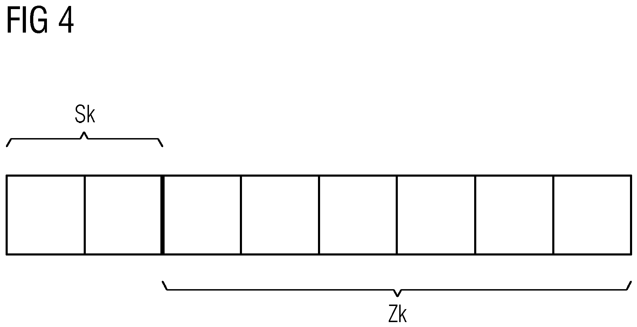

Im Folgenden wird auf Figur 4 verwiesen, in welcher ein Zykluskennungs-Datensatz Zd dargestellt ist. Dieser umfasst im vorliegenden Ausführungsbeispiel eine Zykluskennung Zk von sechs Bit und eine Synchronisationskennung Sk von zwei Bit. Sowohl der Master M (Peripheriebaugruppe Pe4) als auch der Slave S (Peripheriebaugruppe Pe5) stellen im Rahmen eines Master- bzw. Slave-Zyklus, während dessen der Master M und der Slave S die Prozesswerte des Sensors 7 einlesen, den jeweiligen Zykluskennungs-Datensatz Zd zusammen mit den eingelesenen Prozesswerten dem Automatisierungsgerät 3 bereit. Dabei werden nach dem Einlesen der Prozesswerte im Rahmen des jeweiligen Peripheriegeräte-Zyklus die Sensordaten und der Zykluskennungs-Datensatz Zd des Masters M der Anschaltbaugruppe IM4 und entsprechend die Sensordaten und der Zykluskennungs-Datensatz Zd des Slaves S der Anschaltbaugruppe IM5 zugeführt und schließlich im Rahmen eines Kommunikationszyklus des Feldbusses 8 beide Zykluskennungs-Datensätze Zd mit den jeweiligen Sensordaten dem Automatisierungsgerät 3 übermittelt. Mittels einer geeigneten Software oder eines geeigneten Treiberbausteins des Automatisierungsgerätes 3 erkennt das Automatisierungsgerät 3 anhand der jeweiligen Zykluskennung Zk, ob die Sensordaten des Masters M korrespondierend zu den Sensordaten des Slaves S sind, was bedeutet, dass die Master- und Slave-Sensordaten quasi zeitgleich erfasst wurden.

Wie beschrieben, startet der Master M in den Fällen, in denen der Master M während der Master-Zeitintervalle Zm1, Zm2, Zm3 nicht die entsprechenden Slave-Synchronisationsquittungen Q1, Q2, Q3 empfängt, jeweils den unsynchronisierten Lesezyklus Mns, weil in diesen Fällen der Slave S ausgefallen ist. In diesen Fällen trägt der Master M in den Datensatz Zd einen Wert für die Synchronisationskennung Sk ein, der darauf hinweist, dass der Master M und der Slave S nicht synchron sind, wodurch das Automatisierungsgerät 3 die jeweilige Zykluskennung Zk des Master-Zyklusdatensatzes und des Slave-Zyklusdatensatzes nicht auswertet.

Entsprechend startet der Slave S jeweils einen unsynchronisierten Lesezyklus Sns in den Fällen, in denen der Slave S während der Slave-Zeitintervalle Zs1, Zs2, Zs3 nicht die entsprechenden Master-Synchronisationsanforderungen A1, A2, A3 empfängt, was auf einen Ausfall des Masters M hinweist. Auch in diesen Fällen wird mittels des Slaves S in den Datensatz Zd ein Wert für die Synchronisationskennung Sk eingetragen, der darauf hinweist, dass der Master M und der Slave S nicht synchron sind, wodurch das Automatisierungsgerät 3 wiederum die jeweilige Zykluskennung Zk des Master-Zyklusdatensatzes und des Slave-Zyklusdatensatzes nicht auswertet.

Es kann vorkommen, dass die im synchronisierten Betrieb des Masters M und Slaves S eingelesenen korrespondierenden Prozesseingangswerte, die jeweils zusammen mit einer Zykluskennung Zk gekennzeichnet dem Automatisierungsgerät 3 bereitgestellt werden, aufgrund der asynchronen Übertragungsstrecke zwischen dem Automatisierungsgerät 3 und den Baugruppen der Peripheriegeräte 4, 5 nicht zeitgleich von dem Automatisierungsgerät 3 eingelesen werden. Dies bedeutet, dass die eingelesenen Daten des Masters M von den Daten des Slaves S von unterschiedlichen Lesezyklen stammen und daher mit unterschiedlichen Zykluskennungen Zk versehen sind. Im vorliegenden Ausführungsbeispiel sind für die Zykluskennung Zk sechs Bit im Zyklusdatensatz Zd vorgesehen, wodurch ermöglicht wird, dass ein Zykluszähler des Masters M und ein Zykluszähler des Slaves S die Master- bzw. Slave-Zyklen zählen. Eine geeignete Software des Automatisierungsgerätes 3 ermittelt aus dem Master- und dem Slave-Zählerstand die Differenz, wobei der Differenzbetrag der beiden Zählerstände maximal 31 sein darf. Bei heute üblichen Baugruppenzyklen von ca. 5 ms ergibt sich somit eine auswertbare Zeitdifferenz von 155 ms, die ausschließlich durch die asynchronen Übertragungsstrecken zum Automatisierungsgerät 3 bewirkt wird. Für den Fall, dass dieser Wert nicht überschritten wird, bewertet die Software die eingelesenen Master- und Slave-Daten als gültig, vorausgesetzt die Synchronisationskennung Sk zeigt einen synchronen Betrieb an.

Selbstverständlich kann der jeweilige Zykluszähler derart ausgebildet sein, größere Differenzen zu erfassen, indem z. B. die Zykluskennung Zk auf acht Bit erweitert wird.

Die 2-Bit-Breite der Synchronisationskennung Sk ist so gewählt, dass ein synchroner und ein asynchroner Zyklus angezeigt werden können. Beispielsweise zeigen Werte 1, 2 und 3 an, dass der Master M und der Slave S synchron sind, dagegen zeigt ein Wert 0 an, dass der Master-Zyklus nicht synchron zum Slave-Zyklus ist. Selbstverständlich würde für eine derartige Unterscheidung eine Länge von einem Bit ausreichen.

## Patentansprüche

1. Verfahren zum Betreiben eines Automatisierungssystems mit einem Automatisierungsgerät (3) und einem dezentralen Peripheriesystem (6), das mindestens zwei Peripheriebaugruppen (Pe4, Pe5) aufweist, die in einem mehrere Peripheriebaugruppen aufweisenden Peripheriegerät (4, 5) oder jeweils in einem von zwei derartigen Peripheriegeräten (4, 5) angeordnet sind, wobei das Automatisierungsgerät (3) sowie das Peripheriesystem (6) an einen Bus (8) angeschlossen sind und ein Sensor (7) redundant an die beiden Peripheriebaugruppen (Pe4, Pe5) angeschlossen ist, die jeweils während eines Peripheriebaugruppen-Zyklus Sensordaten einlesen und dem Automatisierungsgerät (3) bereitstellen, wobei
- eine der mindestens zwei Peripheriebaugruppen (Pe4, Pe5) als Master (M) und die andere als Slave (S) parametriert wird und der Master (M) und der Slave (S) zur Übertragung von Synchronisationsinformationen mittels einer Synchronisationsleitung (9) verbunden werden,
- die Master- und die Slave-Zyklen mittels der Synchronisationsinformationen synchronisiert werden, und
- dem Automatisierungsgerät (3) zusätzlich zu den während der jeweiligen Master- und Slave-Zyklen eingelesenen Sensordaten jeweils eine Zykluskennung (Zk) bereitgestellt wird,
**dadurch gekennzeichnet, dass** dem Automatisierungsgerät (3) zusätzlich zu der Zykluskennung (Zk) eine Synchronisationskennung (Sk) bereitgestellt wird, welche anzeigt, ob der Masterzyklus zum Slavezyklus synchron oder asynchron ist.

2. Dezentrales Peripheriesystem für ein Automatisierungssystem, mit mindestens zwei Peripheriebaugruppen (Pe4, Pe5), die in einem mehrere Peripheriebaugruppen aufweisenden Peripheriegerät (4, 5) oder jeweils in einem von zwei derartigen Peripheriegeräten (4, 5) angeordnet sind, wobei das Peripheriesystem (6) dazu ausgebildet ist, jeweils während eines Peripheriebaugruppen-Zyklus Sensordaten einzulesen und einem Automatisierungsgerät (3) des Automatisierungssystems bereitzustellen, wobei
- eine der mindestens zwei Peripheriebaugruppen (Pe4, Pe5) als Master (M) und die andere als Slave (S) parametriert ist und der Master (M) und der Slave (S) zur Übertragung von Synchronisationsinformationen mittels einer Synchronisationsleitung (9) verbunden sind,
- der Master (M) und der Slave (S) dazu ausgebildet sind, die Master- und die Slave-Zyklen mittels der Synchronisationsinformationen zu synchronisieren, und
- der Master (M) und der Slave (S) ferner dazu ausgebildet sind, dem Automatisierungsgerät (3) zusätzlich zu den während der jeweiligen Master- und Slave-Zyklen eingelesenen Sensordaten jeweils eine Zykluskennung (Zk) bereitzustellen,
**dadurch gekennzeichnet, dass** der Master (M) und der Slave (S) ferner dazu ausgebildet sind, dem Automatisierungsgerät (3) zusätzlich zu der Zykluskennung (Zk) eine Synchronisationskennung (Sk) bereitzustellen, welche anzeigt, ob der Master-zyklus zum Slavezyklus synchron oder asynchron ist.

3. Automatisierungssystem mit einem Automatisierungsgerät (3) und einem dezentralen Peripheriesystem nach Anspruch 2, wobei das Automatisierungsgerät (3) sowie das Peripheriesystem (6) an einen Bus (8) angeschlossen sind und ein Sensor (7) redundant an die beiden Peripheriebaugruppen (Pe4, Pe5) angeschlossen ist.

## Claims

1. Method for operating an automation system with an automation device (3) and a decentralised peripheral system (6), which has at least two peripheral boards (Pe4, Pe5) which are arranged in a peripheral device (4, 5) having a plurality of peripheral boards or in one of two such peripheral devices (4, 5) in each case, wherein the automation device (3) and the peripheral system (6) are connected to a bus (8) and a sensor (7) is redundantly connected to the two peripheral boards (Pe4, Pe5) which in each case read sensor data during a peripheral board cycle and provide it to the automation device (3), wherein
- one of the at least two peripheral boards (Pe4, Pe5) is parameterised as master (M) and the other as slave (S) and the master (M) and the slave (S) are linked for transmission of synchronisation information by means of a synchronisation line (9),
- the master and the slave cycles are synchronised by means of the synchronisation information and
- a cycle ID (Zk) is provided to the automation device (3) in addition to the sensor data read during the respective master and slave cycles,
**characterised in that** a synchronisation ID (Sk), which indicates whether the master cycle is synchronous or asynchronous with the slave cycle, is provided to the automation device (3) in addition to the cycle ID (Zk).

2. Decentralised peripheral system for an automation system, with at least two peripheral boards (Pe4, Pe5) which are arranged in a peripheral device (4, 5) having a plurality of peripheral boards or in one of two such peripheral devices (4, 5) in each case, wherein the peripheral system (6) is embodied in each case to read sensor data during a peripheral board cycle and to provide it to an automation device (3) of the automation system, wherein
- one of the at least two peripheral boards (Pe4, Pe5) is parameterised as master (M) and the other as slave (S) and the master (M) and the slave (S) are linked for transmission of synchronisation information by means of a synchronisation line (9),
- the master (M) and the slave (S) are embodied to synchronise the master and the slave cycles by means of the synchronisation information and
- the master (M) and the slave (S) are furthermore embodied to provide in each case a cycle ID (Zk) to the automation device (3) in addition to the sensor data read during the respective master and slave cycles,
**characterised in that** the master (M) and the slave (S) are furthermore embodied to provide a synchronisation ID (Sk), which indicates whether the master cycle is synchronous or asynchronous with the slave cycle, to the automation device (3) in addition to the cycle ID (Zk).

3. Automation system with an automation device (3) and a decentralised peripheral system according to claim 2, wherein the automation device (3) and the peripheral system (6) are connected to a bus (8) and a sensor (7) is redundantly connected to the two peripheral boards (Pe4, Pe5).

## Revendications

1. Procédé pour faire fonctionner un système d'automatisation, comprenant un appareil (3) d'automatisation et un système (6) périphérique décentralisé, qui a au moins deux modules (Pe4, Pe5) périphériques, qui sont disposés dans un appareil (4, 5) périphérique ayant plusieurs modules périphériques ou respectivement dans l'un de deux appareils (4, 5) périphériques de ce genre, l'appareil d'automatisation, ainsi que le système (6) périphérique étant raccordé à un bus (8) et un capteur (7) étant raccordé, de manière redondante, aux deux modules (Pe4, Pe5) périphériques, qui livrent chacun des données de capteur pendant un cycle de module périphérique et les mettent à disposition de l'appareil (3) d'automatisation, dans lequel
- on paramétrise l'un des au moins deux modules (Pe4, Pe5) périphériques comme maître (M) et l'autre comme esclave (S) et on relie le maître (M) et l'esclave (S) pour la transmission d'informations de synchronisation au moyen d'une ligne (9) de synchronisation,
- on synchronise le cycle du maître et le cycle de l'esclave au moyen des informations de synchronisation et
- on met à disposition de l'appareil (3) d'automatisation, respectivement une caractérisation (Zk) de cycle, en plus des données de capteur lues pendant le cycle du maître et le cycle de l'esclave,
**caractérisé en ce que** l'on met à disposition de l'appareil (3) d'automatisation, en plus de la caractérisation (Zk) de cycle, une caractérisation (Sk) de synchronisation, qui indique si le cycle du maître est synchrone ou asynchrone au cycle de l'esclave.

2. Système périphérique décentralisé, pour un système d'automatisation, comprenant au moins deux modules (Pe4, Pe5), disposés dans un appareil (4, 5) périphérique ayant plusieurs modules périphériques ou respectivement dans l'un de deux appareils (4, 5) périphériques de ce genre, le système (6) périphérique étant constitué pour lire, pendant un cycle de module périphérique, des données de capteur et les mettre à disposition d'un appareil (3) d'automatisation du système d'automatisation, dans lequel
- l'un des au moins deux modules (Pe4, Pe5) périphériques est paramétré comme maître (M) et l'autre comme esclave (S) et le maître (M) et l'esclave (S) sont, pour la transmission d'informations de synchronisation, reliés au moyen d'une ligne (9) de synchronisation,
- le maître (M) et l'esclave (S) sont constitués pour synchroniser le cycle du maître et le cycle de l'esclave, au moyen des informations de synchronisation et
- le maître (M) et l'esclave (S) sont constitués, en outre, pour mettre à disposition de l'appareil (3) d'automatisation, respectivement une caractérisation (Zk) de cycle, supplémentairement aux données de capteur lues pendant le cycle du maître et le cycle de l'esclave,
**caractérisé en ce que** le maître (M) et l'esclave (S) sont constitués, en outre, pour mettre à disposition de l'appareil (3) d'automatisation, en plus de la caractérisation (Zk) de cycle, une caractérisation (Sk) de synchronisation qui indique si le cycle du maître est synchrone ou asynchrone au cycle de l'esclave.

3. Système d'automatisation comprenant un appareil (3) d'automatisation et un système périphérique décentralisé suivant la revendication 2, dans lequel l'appareil (3) d'automatisation, ainsi que le système (6) périphérique, sont raccordés à un bus (8) et un capteur (7) est raccordé, de manière redondante, aux deux modules (Pe4, Pe5) périphériques.
